# EUROPÄISCHE PATENTANMELDUNG

(11) **EP 1 300 651 A2**
(43) Veröffentlichungstag der Anmeldung: **09.04.2003**
(21) Anmeldenummer: 02022149.5
(22) Anmeldetag: 02.10.2002
(51) Int. Cl.: G01B 7/30

(54) **Verfahren zur Offsetkompensation eines magnetoresistiven Weg- oder Winkelmesssystems**

(30) Priorität: 04.10.2001 DE 10148918
(71) Anmelder: Philips Corporate Intellectual Property GmbH, 20099 Hamburg (DE); Koninklijke Philips Electronics N.V., 5621 BA Eindhoven (NL)
(72) Erfinder: Muth, Michael, Weisshausstrasse 2, 52066 Aachen (DE)
(74) Vertreter: Zöllner, Christine

(57) **Zusammenfassung**

Um ein Verfahren zur Offsetkompensation eines magnetoresistiven Weg- oder Winkelmeßsystems zu schaffen, das mindestens eine Wheatstonesche Brücke mit vier örtlich versetzten, mit einer Gleichspannung beaufschlagten magnetoresistiven Widerständen enthält, an denen ein Permanentmagnet (2) vorbeibewegt wird, wobei die jeweilige Brückenspannung gemessen wird, mit dem die spätere Offsetkompensation von magnetoresistiven Weg- oder Winkelmeßsystemen auch vor Ort möglich ist, ist vorgesehen, dass bei einer Inbetriebnahme des Meßsystems ein Kalibrierzyklus durchfahren wird, indem
- der Permanentmagnet (2) für eine Meßperiode an der oder den Brücken vorbeibewegt wird,
- die dabei gemessenen Extremwerte der Brückenspannungen ausgewertet werden, indem deren Mittelwerte gebildet werden und
- aus diesen Mittelwerten als von dem Meßsystem zu berücksichtigende Offsetwerte entsprechende Kompensationswerte gebildet werden, die in einem Register gespeichert werden.

## Beschreibung

Die Erfindung betrifft ein Verfahren zur Offsetkompensation eines magnetoresistiven Weg- oder Winkelmeßsystems, das mindestens eine Wheatstonesche Brücke mit vier örtlich versetzten, mit einer Gleichspannung beaufschlagten magnetoresistiven Widerständen enthält, an denen ein Permanentmagnet vorbeibewegt wird, wobei die jeweilige Brückenspannung gemessen wird

Zur Weg- und Winkelmessung werden heute üblicherweise magnetoresistive Sensoren eingesetzt. Diese bestehen aus magnetoresistiven Widerständen, die nach Art einer Wheatstoneschen Brücke auf einem meist scheibenförmigen Träger angeordnet sind, vor dem sich ein Permanentmagnet dreht. Um ein lineares Ausgangssignal zu erhalten, werden zwei Brücken verwendet, deren Widerstände um einen mechanischen Winkel um 45° verdreht sind, so dass eine Brücke ein Sinus- und die andere ein Kosinussignal erzeugt. Die ARC-TAN-Funktion ermöglicht dann eine lineare Funktion über 180° als Ausgangssignal. Die Auswertung der Signale erfolgt beispielsweise in einem Mixed-Signal-IC, das zusammen mit dem Sensor ein Meßsystem ergibt.

Die magnetoresistiven Widerstände sind durch den Herstellungsprozeß bedingt ungleich, was sich jedoch bei Inbetriebnahme des Meßsystems im IC herauskompensieren läßt. Diese Kompensation erfolgt somit individuell für jedes einzelne Meßsystem. Während eines Endmeßvorgangs wird der Sensor vor seiner Auslieferung derart magnetisch erregt, dass man aus den Signalen den Einzeloffset, also den jeweiligen Offset beider Brücken, ermitteln kann. Diese Werte werden in ein EEPROM im IC eingeschrieben und später durch den IC berücksichtigt.

Nach EP 1 001 248 A2 wird eine Methode beschrieben, ein Meßsystem mit magnetoresistiven Sensoren fabrikseitig einmalig abzugleichen, indem die Brücken äußeren Magnetfeldern verschiedener Richtung ausgesetzt werden. Die von einer Wheatstoneschen Brücke nach Entfernen eines Gleichmagnetfeldes gelieferte Ausgangsspannung soll dabei ein Maß für die jeweilige Offsetspannung darstellen, die zur Kalibrierung herangezogen wird.

Neben den herstellungsbedingten Toleranzen unterliegen die magnetischen Widerstände auch einer Alterung, die weitere Offsetfehler hervorruft. Das Meßsystem müßte deshalb, wollte man sicher sein gegenüber sich neu bildenden Offsetfehlern, von Zeit zu Zeit unter fabrikmäßigen Bedingungen neu kalibriert werden, was einen Aurwand bedeutet, den die Anwender verständlicherweise scheuen. Sie nehmen stattdessen einen Fehler eher in Kauf.

Der Erfindung liegt deshalb die Aufgabe zugrunde, ein Verfahren anzugeben, mit dem die spätere Offsetkompensation von magnetoresistiven Weg- oder WinkelMeßsystemen auch vor Ort möglich ist.

Erfindungsgemäß wird die Aufgabe gelöst durch die Merkmale des Anspruches 1. Zweckmäßige Ausgestaltungen sind Gegenstand der Unteransprüche.

Danach wird bei einer Inbetriebnahme des Meßsystems ein Kalibrierzyklus durchfahren, indem
- der Permanentmagnet für eine Meßperiode an der oder den Brücken vorbeibewegt wird,
- die dabei gemessenen Extremwerte der Brückenspannungen ausgewertet werden, indem deren Mittelwerte gebildet werden und
- aus diesen Mittelwerten als von dem Meßsystem zu berücksichtigende Offsetwerte entsprechende Kompensationswerte gebildet werden, die in einem Register gespeichert werden.

Ein solcher Kalibrierzyklus kann bei jedem Einschalten des Meßsystems durchfahren werden. Es kann aber auch vorgesehen sein, dass erst nach einer entsprechenden Anzahl von Meßzyklen, zum Beispiel bei jedem zehnten, ein Kalibrierzyklus durchgeführt wird. Für bestimmte Anwendungen, zum Beispiel für Kraftfahrzeuge, kann auch vorgesehen werden, dass nur dazu berechtigtes Personal eine Kalibrierung vornehmen darf, so dass diese dann bei einer planmäßigen Wartung erfolgen könnte.

Im letztgenannten Fall könnte man als Register das EEPROM heranziehen, in das die Kompensationswerte bereits bei der fabrikmäßigen Kalibrierung eingeschrieben wurden. Im Fall eines grundsätzlichen Kalibrierzyklus bei jeder Inbetriebnahme des Meßsystems würde als Register auch ein flüchtiger Speicher genügen.

Die Erfindung hat den Vorteil, dass über die gesamte Lebensdauer des Meßsystems eine selbsttätige oder gewollt vorzunehmende Offsetkalibrierung möglich ist. Der Kalibrierzyklus kann in den Inbetriebnahmemodus einer Maschine so integriert werden, dass er nach dem Einschalten der Maschine selbsttätig abläuft, indem beispielsweise in einem Leerlaufzustand eine Kalibrierung eines Winkelmeßsystems durchgeführt wird. Hierzu genügt bereits eine halbe Umdrehung des Permanentmagneten. Eine Meßzeit von weniger als 100 ms ist für den Kalibrierzyklus ausreichend.

Unter der Voraussetzung, dass in dem Meßsystem mit einem Starkfeld gearbeitet wird, d.h., dass die Sensoren im Bereich der Amplituden in die Sättigung fahren und somit die Empfindlichkeit des Meßsignals keine Rolle spielt, sondern allein seine Phasenlage, ist sichergestellt, dass die Meßgröße bei einer halben Umdrehung des Permanentmagneten voll durchfahren wird und damit die gemessenen Extremwerte garantiert "echte" Werte sind. Das bedeutet, dass auch die ermittelten Offsetwerte immer "echt" sind.

Die Erfindung soll nachstehend anhand eines Ausführungsbeispiels näher erläutert werden. In den zugehörigen Zeichnungen zeigen:
- Fig. 1: den Verlauf der Sensorausgangssignale zur Verdeutlichung des Verfahrens und
- Fig. 2: ein Blockschaltbild des Meßsystems.

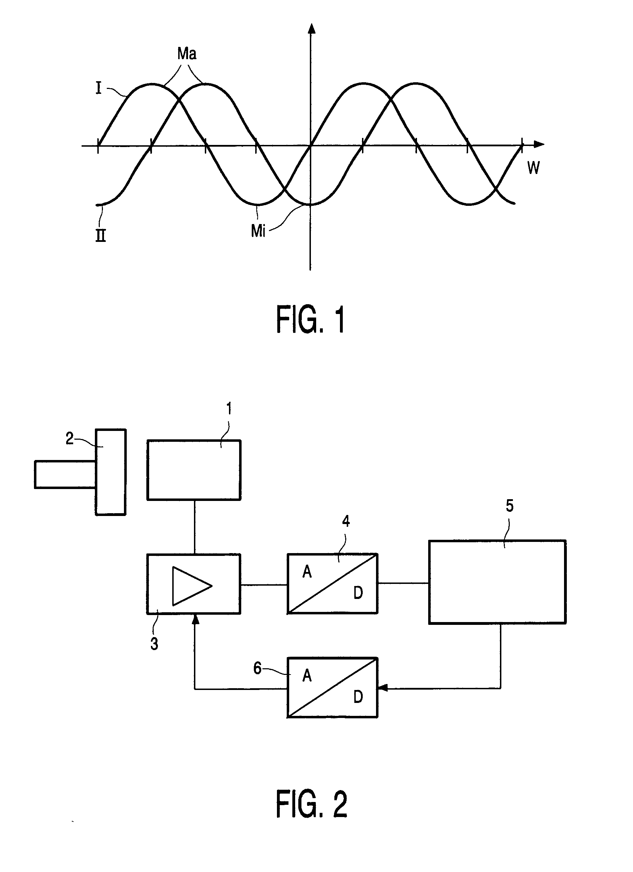

Fig. 1 zeigt den Verlauf der Spannungssignale von zwei um 45° versetzten Wheatstoneschen Brücken in Abhängigkeit vom Winkel eines an den magnetoresistiven Widerständen der Brücken vorbeilaufenden Permanentmagneten. Der Versatz entspricht einem elektrischen Winkel von 90°. Entsprechend dem gezeigten Bezugssystem zeigt sich ein sinusförmiger Verlauf I eines Sensors A und ein negativ kosinusförmiger Signalverlauf II eines Sensors B. Ein Offset würde sich jeweils in einer konstanten Verschiebung des gewonnenen Spannungssignals entlang des Winkels (W) zeigen.

Ein Offset läßt sich deshalb durch eine Messung der Maxima (Ma) und Minima (Mi) ermitteln. Bei einem Kalibrierzyklus werden die vier Extremwerte ermittelt, indem die Meßperiode durch Drehen des Permanentmagneten einmal durchfahren wird und gleichzeitig vier Extremwertregister aktiviert werden, das heißt, es werden in jeweils zwei Registern für jeden Sensor A und B jeweils in einem das Minimum und in einem anderen das Maximum bestimmt. Das kann beispielsweise in einer Vergleichsform geschehen, indem ein zeitdiskretes Signal gespeichert und mit dem nächsten Abtastwert verglichen wird. Für das Maximumregister gilt: Ist der nächste Wert höher als der letzte, so übernehme den Wert, sonst nicht. Umgekehrt ist für das Minimumregister zu verfahren. Gegebenenfalls kann am Ende dieses Meßvorgangs eine Quittierung durch den Anwender vorgesehen sein. Der Sensor-IC errechnet darauf den Mittelwert (Offset) und legt einen dazu passenden Kompensationswert in einem Register ab, der von da an für die Offsetkompensation benutzt wird.

Fig. 2 zeigt ein Blockschaltbild des Winkelmeßsystems für einen Sensor. Vor einem Magnetfeldsensor 1, der die in Brückenschaltungen angeordnete magnetoresistive Widerstände enthält, ist ein Permanentmagnet 2 drehbar plaziert. Der Magnetfeldsensor 1 stellt die Winkelposition des Permanentmagneten 2 als elektrische Größe dar, wie sie in Fig. 1 gezeigt wurde. Das Sensorsignal gelangt über einen Verstärker 3 und einen A/D-Wandler 4 zu einer digital arbeitenden Steuereinheit ("digital control") 5. Bei dem Kalibrierzyklus werden die Maxima und Minima der Sensorsignale gesucht, die Offsetspannung festgestellt und ein Kompensationswert festgelegt, wie oben beschrieben wurde.

Während des anschließenden Betriebs des Winkelmeßsystems wird das digitalisierte Signal in der Steuereinheit 5 direkt verarbeitet, wobei der in der Steuereinheit 5 gespeicherte Kompensationswert über einen D/A-Wandler 6 an den Verstärker 3 zurückgegeben wird, um dem zuvor festgestellten Offset entgegenzusteuern, so dass das Eingangssignal am A/D-Wandler 4 offsetfrei ist.

### BEZUGSZEICHENLISTE

- 1: Magnetfeldsensor
- 2.: Permanentmagnet
- 3: Verstärker
- 4: A/D-Wandler
- 5: Steuereinheit
- 6: D/A-Wandler
- Ma: Maxima
- Mi: Minima
- W: Winkel
- I, II: Signalverlauf

## Patentansprüche

1. Verfahren zur Offsetkompensation eines magnetoresistiven Weg- oder Winkelmeßsystems, das mindestens eine Wheatstonesche Brücke mit vier örtlich versetzten, mit einer Gleichspannung beaufschlagten magnetoresistiven Widerständen enthält, an denen ein Permanentmagnet vorbeibewegt wird, wobei die jeweilige Brückenspannung gemessen wird,
**dadurch gekennzeichnet,**
**dass** bei einer Inbetriebnahme des Meßsystems ein Kalibrierzyklus durchfahren wird, indem
- der Permanentmagnet für eine Meßperiode an der oder den Brücken vorbeibewegt wird,
- die dabei gemessenen Extremwerte der Brückenspannungen ausgewertet werden, indem deren Mittelwerte gebildet werden und
- aus diesen Mittelwerten als von dem Meßsystem zu berücksichtigende Offsetwerte entsprechende Kompensationswerte gebildet werden, die in einem Register gespeichert werden.

2. Verfahren nach Anspruch 1,
**dadurch gekennzeichnet,**
**dass** der Kalibrierzyklus bei jeder Inbetriebnahme durchfahren wird.

3. Verfahren nach Anspruch 1,
**dadurch gekennzeichnet,**
**dass** der Kalibrierzyklus bei jeder n-ten Inbetriebnahme durchfahren wird, wobei n eine bestimmbare natürliche Zahl ist.

4. Verfahren nach Anspruch 1,
**dadurch gekennzeichnet,**
**dass** der Kalibrierzyklus bei einer bestimmbaren Inbetriebnahme durchfahren wird.

5. Verfahren nach einem der vorhergehenden Ansprüche,
**dadurch gekennzeichnet,**
**dass** der Kalibrierzyklus in den Inbetriebnahmemodus einer Maschine so integriert ist, dass er automatisch durchfahren wird.

6. Verfahren nach einem der vorhergehenden Ansprüche,
**dadurch gekennzeichnet,**
**dass** das Weg- oder Winkelmeßsystem mit einem Starkfeld betrieben wird.
